# EUROPEAN PATENT SPECIFICATION

(11) **EP 4 249 284 B1**
(45) Date of publication and mention of the grant of the patent: **17.12.2025**
(21) Application number: 23150481.2
(22) Date of filing: 05.01.2023
(51) Int. Cl.: B60B 1/00, B60B 1/04, B60B 27/02, B60B 27/00

(54) **BICYCLE WHEEL HUB STRUCTURE**
FAHRRAD-RADNABENSTRUKTUR
STRUCTURE DE MOYEU DE ROUE DE BICYCLETTE

(30) Priority: 23.03.2022 TW 111110723
(43) Date of publication of application: 27.09.2023
(73) Proprietor: Yang, Meng-Lung, 514011 Changhua (TW)
(72) Inventor: Yang, Meng-Lung, 514011 Changhua (TW)
(74) Representative: Zaboliene, Reda

(56) References cited:
- EP-A1- 0 896 886
- DE-U1- 20 009 502
- US-A1- 2004 222 692
- US-A1- 2008 309 152

## Description

### FIELD

The present invention relates to a bicycle wheel hub structure, especially a kind of wheel hub which is applied to disperse the force of the steel wire between the bicycle wheel frame and the wheel hub, enhance the pulling force and reduce the friction between the steel wires, which belongs to the technical field.

### BACKGROUND

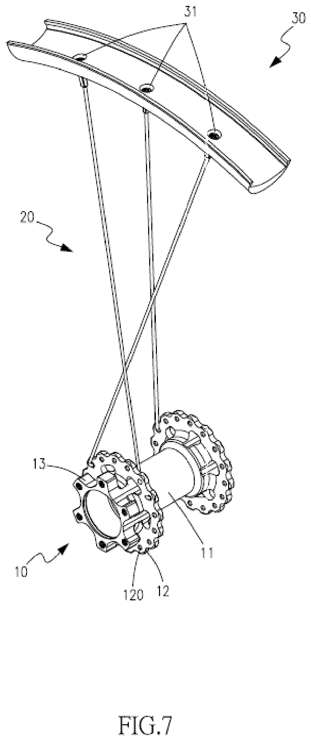

Referring to FIG. 7, the structure of the conventional bicycle hub is shown therein. The hub 10 includes a hub body 11 and at least two hub discs 12. The hub discs 12 are oppositely disposed on both sides of the hub body 11 and are in the same direction as the edge of the hub body 11. The hub 12 is provided with several spoke fixing holes 120 at equal intervals. By fitting the hub 10 with several spokes 20 and a wheel frame 30, the wheel frame 30 is provided with several positioning combining holes 31 at intervals. One end of the bar 20 is respectively fixed to the wheel spoke fixing holes 120 provided in the hub plate 12, and the other ends of the plurality of wheel spokes 20 are respectively fixed to the number of positioning and combining holes 31 provided in the wheel frame 30, and the wheel spokes 20 are crossed. The state is set, and the middle sections of each wheel spokes 20 are in contact with each other, and then the weight and force are carried by the front and rear wheels respectively when the bicycle is in contact with the ground, and the overall force will be concentrated on the hub 12 combined with the spokes 20 of the wheels. The number of wheel spoke fixing holes 120 is set, so the force around the wheel spoke fixing holes 120 is concentrated, and there is a problem of structural stability. In addition, the wheel spokes 20 in the crossed state contacting and abutting each other in the middle section will be affected by the hub body 11. The friction at the abutting position of the spokes 20 caused by the force also reduces the strength and service life of the spokes 20, so there is a need for improvement.

In US2008309152 (A1) document is described the wheel which has a connection device (4) for connecting a rim to a hub (3) and provided with a spoke (5) associated with a head. The hub defines a groove for accommodating a portion of the spoke in a plane perpendicular to an axis (X-X') of the wheel and along a direction tangential relative to the hub. The hub defines a stop along the tangential direction for supporting the head, and defines a return unit for returning the head along radial direction when the spoke is tangentially oriented relative to the hub. However, this solution comes with maintenance challenges.

### SUMMARY OF THE DISCLOSURE

In view of the problems of insufficient structural stability, structural strength and service life of the conventional bicycle hub structure, the present invention completes the bicycle hub structure.

The main purpose of the present invention is to provide a bicycle wheel hub structure, wherein the wheel hub system includes a wheel hub body, a ratchet disc and at least two hub disc sets. The outer diameter of the outer hub disc is larger than the outer diameter of the inner hub disc. The outer hub disc is staggered with several fixed protrusions and several recesses, and the fixed protrusions are respectively provided with an outer fixing hole. In the inner hub disc is provided with inner fixing holes arranged relative to recessed parts of outer hub discs . The hub disc sets are respectively arranged on two sides of the hub body, and the ratchet discs are arranged on the outer side of the hub disc set on one side of the hub body.

In a preferred embodiment, it further comprises several wheel spokes and a wheel frame, each of fixed convex portions of the outer hub disc is provided with an inclined cut surface relative to the side surface of the ratchet disc, and one end of the number of wheel spokes is fixed on the wheel frame, the other ends of the spokes are fixed on the outer fixing holes of the fixed convex part of the outer hub disc, and the inclined cut surface of the fixed convex part prevents the friction between the spokes and the fixed convex part, so as to increase the number of wheels. The rigidity and service life of the spoke structure enhances the multiple variability of the present invention.

In a preferred embodiment, it further includes plurality of spokes and a frame, the inner fixing holes of the inner hub disc are provided with a recessed portion, one end of the spokes is fixed on the frame, and the spokes are fixed on the frame. When the other end of the strip is fixed in the outer fixing hole of the fixed convex part of the outer wheel hub, the recessed part is used to avoid the several wheel spokes during assembly, which is convenient for assembling and fixing, so as to improve the multi-variability of the present invention.

In a preferred embodiment, the recessed portion of the inner hub disc is further provided with a trough, and the depth of the trough is lower than the outer diameter of the outer fixing hole provided in the outer hub disc, and the spokes are fixed on the outer hub disc. When the number of fixed convex parts of the disc are provided with external fixing holes, the valleys of the recessed parts are used to avoid the number of spokes during assembly, so that the spokes do not contact the inner hub disc, and the endurance strength and service life of the spokes are improved. Multiple variations of the invention are provided.

The two sides of the hub body of the wheel hub are respectively provided with a hub disc set, and the wheel hub disc group is provided with an outer hub disc and an inner hub disc at intervals. The frame is fixedly combined, and the other ends of the spokes are fixedly combined with the outer hub disc and the inner hub disc respectively. The force generated by the scattered spokes is applied to the outer hub disc and the inner hub disc, so as to avoid the outer hub disc or the inner hub disc from being overburdened. The outer hub disc and the inner hub disc are arranged at intervals, so that the spokes of several wheels will come into contact with each other when they are assembled, reducing friction and affecting the strength and service life of the structure, so as to achieve the convenience and function of the structure.

### BRIEF DESCRIPTION OF THE DRAWINGS

[FIG. 1] is a three-dimensional schematic diagram of the structure of the bicycle wheel hub of the present invention.
[Fig. 2] It is a schematic view of the bicycle wheel hub structure of the present invention as seen before.
[FIG. 3] It is a side view half-section and a partial enlarged state reference view of the bicycle wheel hub structure of the present invention.
[FIG. 4] It is a reference view of the three-dimensional use state of the bicycle hub structure of the present invention assembled with the spokes and the wheel frame.
[FIG. 5] It is a side view of the use state reference diagram of the assembly of the spokes and the wheel frame of the bicycle hub structure of the present invention.
[Fig. 6] is a reference diagram of the state in which the depth of the trough of the recessed portion provided in the inner hub disc is lower than the outer diameter of the outer fixing hole provided in the outer hub, according to the embodiment of the bicycle hub structure of the present invention.
[FIG. 7] is a reference view of a three-dimensional state of a conventional bicycle hub structure of the bicycle hub structure of the present invention.

### DETAILED DESCRIPTION

In order to enable your examiners to further understand the structure, features and other purposes of the present invention, the following preferred embodiments are described in detail with drawings as follows, but the embodiments described in the drawings are for illustrative purposes.

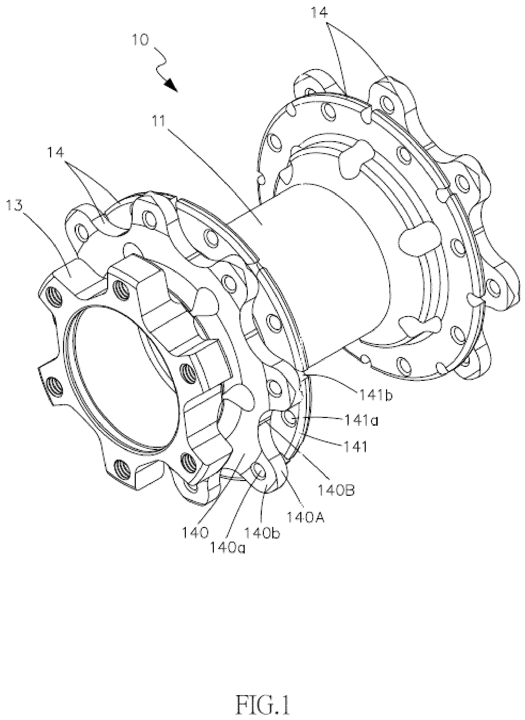

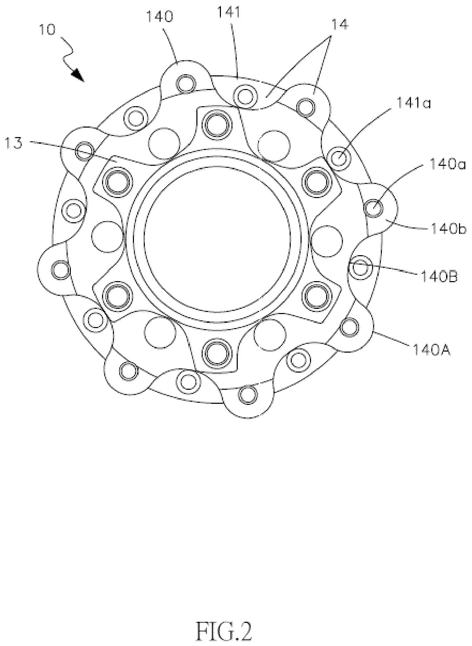

Reference is collectively made to FIGS. 1 to 3, which are the three-dimensional state, front-view state, side-view half-section and partial enlarged state reference diagram of the bicycle hub structure of the present invention, which include:

A hub 10, the hub 10 is provided with a hub body 11, a ratchet disc 13 and at least two hub disc sets 14, the hub disc sets 14 are respectively provided with an outer hub disc 140 and an inner hub disc 141, the outer diameter of the outer hub disc 140 is larger than the outer diameter of the inner hub disc 141, and the outer hub disc 140 is alternately provided with several fixing convex portions 140A and several recesses 140B, and the fixing convex portions 140A are respectively provided with an outer fixing hole 140a, the inner hub disc 141 is provided with an inner fixing hole 141a within each of recesses 140B of the outer hub disc 140, and the hub disc set 14 is respectively arranged on both sides of the hub body 11. And the ratchet disc 13 is arranged on the outer side of the hub disc set 14 on one side of the main body 11.

Through the cooperation of the above structures, the bicycle wheel hub set 14 of the present invention is completed.

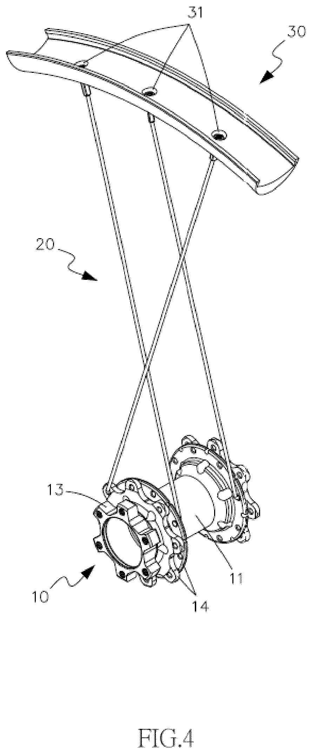

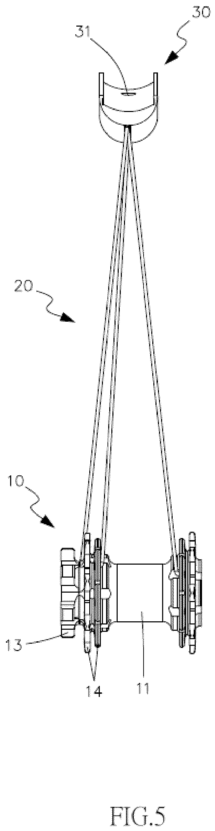

Reference is next made to FIGS 1 to 5, which are the three-dimensional state, front-view state, side-view half-section and partial enlarged state of the bicycle hub set 14 of the present invention, the three-dimensional use state assembled with the spokes and the wheel frame, and the spokes and the wheel frame. Referring to the assembled side view of the use state, the hub 10 is provided with hub disc sets 14 on both sides of the hub body 11. The hub disc set 14 is provided with an outer hub disc 140 and an inner hub disc 141 at intervals. The wheel spokes 20 and the wheel frame 30 are assembled, one end of the number of wheel spokes 20 is fixedly combined with the wheel frame 30, and the other end of the number of wheel spokes 20 is fixedly combined with the outer hub disc 140 and the inner hub disc 141 respectively. The outer hub disc 140 and the inner hub disc 141 are subjected to force to prevent the outer hub disc 140 or the inner hub disc 141 from being subjected to excessive force, and the outer hub disc 140 and the inner hub disc 141 are arranged at intervals to allow the number of spokes 20. During assembly, the parts will come into contact with each other, reducing friction and affecting the structural strength and service life, so as to achieve the effect of convenient use of the structure and good function of the structure.

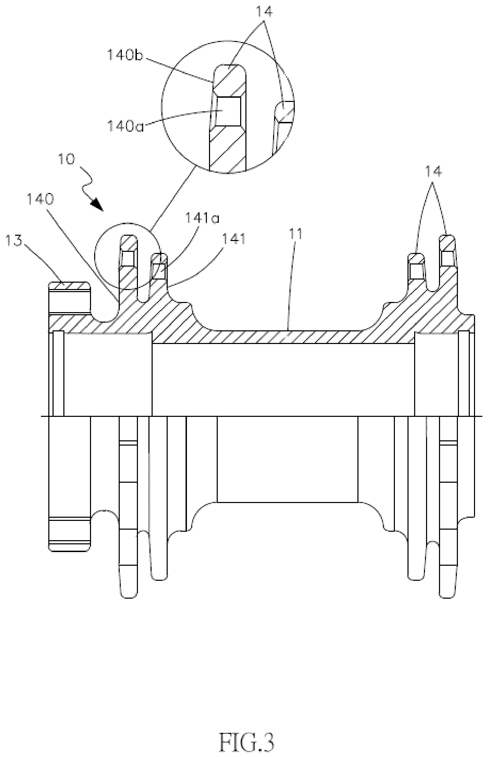

Reference is again made to FIG. 3, which is a side view of a half-section and a partial enlarged state reference view of the bicycle hub set 14 of the present invention. In a preferred embodiment, it further includes several wheel spokes 20 and a wheel frame 30. The number of fixing convex portions 140A is provided with an inclined cut surface 140b relative to the side surface of the ratchet disc 13. One end of the number of spokes 20 is fixed to the wheel frame 30, and the other end of the number of spokes 20 is fixed to the outer hub disc 140. The outer fixing holes 140a are provided on the fixed convex portions 140A, and the inclined cut surface portion 140b provided on the fixing convex portion 140A prevents friction between the spokes 20 and the fixing convex portions 140A, thereby improving the rigidity and service life of the spokes 20. The multiple variability of the present invention is enhanced.

Reference again made back to FIG. 1, which is a three-dimensional schematic diagram of the structure of the bicycle hub of the present invention. In a preferred embodiment, it further includes several spokes 20 and a wheel frame 30. The inner hub disc 141 has a fixed hole. Between 141a, there is a recessed portion 141b, one end of several spokes 20 is fixed on the wheel frame 30, and the other end of the several spokes 20 is fixed on the outer hub disc 140. When the hole 140a is formed, the recessed portion 141b is used for avoidance when the spokes 20 of the wheel are assembled, so as to facilitate the assembly and fixation, so as to enhance the multiple variability of the present invention.

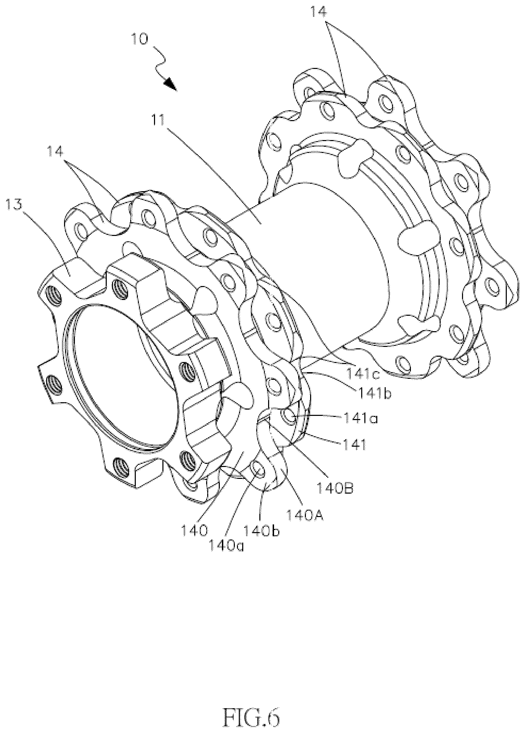

Reference is made to FIG. 6, which is a reference diagram of a state in which the depth of the troughs of the recesses provided in the inner hub disc is lower than the outer diameter of the outer fixing holes provided in the outer hub disc, in a preferred embodiment of the bicycle hub structure of the present invention. Except that the recessed portion 141b of the inner hub disc 141 is provided with a depressed portion 141c, and the depth of the depression of the depressed portion 141c is smaller than the outer diameter of the outer fixing hole 140a provided in the outer hub disc 140, when the spokes 20 are fixed on the outer fixing holes 140a of the fixed convex portions 140A of the outer hub disc 140, the depressed portion 141c of the recessed portions 141b are used to avoid the spokes 20 when they are assembled, so that the spokes 20 are not in contact with the inner hub disc 141. Thus endurance strength and service life of the wheel spokes 20, so as to increase the multiple variability of the present invention.

To sum up, the present invention can indeed achieve the above-mentioned functions and purposes.

## Claims

1. A hub (10) structure for a bicycle wheel, comprising:
a hub (10), wherein the hub (10) comprise a hub body (11), a ratchet disc (13) and at least two hub disc sets (14), the hub disc sets (14) respectively comprise an outer hub disc (140) and an inner hub disc (141) at interval, and the outer hub disc (140) is alternating with several fixing convex portions (140A) and the recessed parts (140B), and the fixing convex portions (140A) are each respectively provided with an outer fixing hole (140a), and the hub disc sets (14) are respectively arranged on the two sides of the hub body (11), and the ratchet disc (13) is arranged on the outer side of the hub disc sets (14) on one side of the hub body (11),
**characterised in that**,
the inner hub disc (141) is provided with inner fixing holes (141a) arranged relative to recessed parts (140B) of the outer hub disc (140).

2. The hub (10) structure according to claim 1, wherein the inner hub disc (141) is provided with outwardly opening recessed portions (141b) positioned between the inner fixing holes (141a).

3. The hub (10) structure according to claim 1, wherein the outer diameter of the outer hub disc (140) is larger than the outer diameter of the inner hub disc (141).

4. A bicycle wheel **characterized in that** it comprises:
a hub (10) structure according to any of claims 1-3 and
a plurality of wheel spokes (20), wherein one end of a first plurality of the plurality of wheel spokes (20) is respectively fixed to the outer fixing hole (140a) provided in the fixing convex portions (140A) of the outer hub disc (140) and a second plurality of the plurality spokes (20) is fixed to the inner fixing hole (141a) provided in the inner hub disc (141); and
a wheel frame (30), wherein the inner space of the wheel frame (30) is fixed with the other ends of the plurality of wheel spokes (20).

5. The bicycle wheel according to claim 4, wherein, the number of the fixing convex portions (140A) of the outer hub disc (140) is provided with an inclined cut surface (140b) relative to the side surface of the ratchet disc (13), and the inclined cut surfaces (140b) are provided on the fixing convex portions (140A) to prevent the contact between the plurality of wheel spokes (20) and the fixing convex portions (140A).

6. The bicycle wheel according to claim 4, wherein, the outer diameter of the outer hub disc (140) is larger than the outer diameter of the inner hub disc (141).

7. The bicycle wheel according to claim 4, wherein, the recessed portion (141b) of the inner hub disc (141) is further provided with a depressed portion (141c), and a depth of a depression of the depressed portion (141c) is smaller than the outer diameter of the outer fixing hole (140a) provided on the outer hub disc (140), and the each of spokes (20) fixed to the relative fixing convex portions (140A) of the outer hub disc (140) is set, when the outer fixing hole (140a) is used and the depressed portion (141c) of the recessed portion (141b) is configured to avoid several spokes (20) during assembly, so that the spokes (20) do not contact the inner hub disc (141).

## Patentansprüche

1. Eine Nabenstruktur (10) für ein Fahrrad-Laufrad, umfassend:
eine Nabe (10), wobei die Nabe (10) einen Nabenkörper (11), eine Ratschenscheibe (13) und mindestens zwei Nabenscheibensätze (14) umfasst, wobei die Nabenscheibensätze (14) jeweils eine äußere Nabenscheibe (140) und eine innere Nabenscheibe (141) in einem Abstand umfassen, und die äußere Nabenscheibe (140) abwechselnd mehrere Befestigungs-Vorsprünge (140A) und ausgesparte Teile (140B) aufweist, und die Befestigungs-Vorsprünge (140A) jeweils mit einem äußeren Befestigungsloch (140a) versehen sind, und die Nabenscheibensätze (14) jeweils auf den beiden Seiten des Nabenkörpers (11) angeordnet sind, und die Ratschenscheibe (13) auf der Außenseite der Nabenscheibensätze (14) auf einer Seite des Nabenkörpers (11) angeordnet ist,
**dadurch gekennzeichnet, dass**
die innere Nabenscheibe (141) mit inneren Befestigungslöchern (141a) versehen ist, die relativ zu ausgesparten Teilen (140B) der äußeren Nabenscheibe (140) angeordnet sind.

2. Die Nabenstruktur (10) nach Anspruch 1, wobei die innere Nabenscheibe (141) mit nach außen öffnenden ausgesparten Abschnitten (141b) versehen ist, die zwischen den inneren Befestigungslöchern (141a) positioniert sind.

3. Die Nabenstruktur (10) nach Anspruch 1, wobei der Außendurchmesser der äußeren Nabenscheibe (140) größer ist als der Außendurchmesser der inneren Nabenscheibe (141).

4. Ein Fahrrad-Laufrad, **dadurch gekennzeichnet, dass** es umfasst:
eine Nabenstruktur (10) nach einem der Ansprüche 1-3 und
eine Vielzahl von Radspeichen (20), wobei ein Ende einer ersten Vielzahl der Vielzahl von Radspeichen (20) jeweils an dem äußeren Befestigungsloch (140a) befestigt ist, das in den Befestigungs-Vorsprüngen (140A) der äußeren Nabenscheibe (140) vorgesehen ist, und eine zweite Vielzahl der Vielzahl von Speichen (20) an dem inneren Befestigungsloch (141a) befestigt ist, das in der inneren Nabenscheibe (141) vorgesehen ist; und
eine Felge (30), wobei die anderen Enden der Vielzahl von Radspeichen (20) an der Felge (30) befestigt sind.

5. Das Fahrrad-Laufrad nach Anspruch 4, wobei die Befestigungs-Vorsprünge (140A) der äußeren Nabenscheibe (140) mit einer geneigten Schnittfläche (140b) relativ zur Seitenfläche der Ratschenscheibe (13) versehen sind, und die geneigten Schnittflächen (140b) an den Befestigungs-Vorsprüngen (140A) vorgesehen sind, um den Kontakt zwischen der Vielzahl von Radspeichen (20) und den Befestigungs-Vorsprüngen (140A) zu verhindern.

6. Das Fahrrad-Laufrad nach Anspruch 4, wobei der Außendurchmesser der äußeren Nabenscheibe (140) größer ist als der Außendurchmesser der inneren Nabenscheibe (141).

7. Das Fahrrad-Laufrad nach Anspruch 4, wobei der ausgesparte Abschnitt (141b) der inneren Nabenscheibe (141) ferner mit einem vertieften Abschnitt (141c) versehen ist, und eine Vertiefungstiefe des vertieften Abschnitts (141c) kleiner ist als der Außendurchmesser des äußeren Befestigungslochs (140a), das an der äußeren Nabenscheibe (140) vorgesehen ist, und wobei, wenn die Speichen (20) an den jeweiligen Befestigungs-Vorsprüngen (140A) der äußeren Nabenscheibe (140) unter Verwendung des äußeren Befestigungslochs (140a) befestigt sind, der vertiefte Abschnitt (141c) des ausgesparten Abschnitts (141b) konfiguriert ist, um mehreren Speichen (20) während der Montage auszuweichen, so dass die Speichen (20) die innere Nabenscheibe (141) nicht berühren.

## Revendications

1. Une structure de moyeu (10) pour une roue de bicyclette, comprenant:
un moyeu (10), dans laquelle le moyeu (10) comprend un corps de moyeu (11), un disque à rochet (13) et au moins deux ensembles de disques de moyeu (14), les ensembles de disques de moyeu (14) comprennent respectivement un disque de moyeu extérieur (140) et un disque de moyeu intérieur (141) à intervalle, et le disque de moyeu extérieur (140) présente une alternance de plusieurs parties convexes de fixation (140A) et de parties évidées (140B), et les parties convexes de fixation (140A) sont chacune respectivement pourvues d'un trou de fixation extérieur (140a), et les ensembles de disques de moyeu (14) sont respectivement disposés sur les deux côtés du corps de moyeu (11), et le disque à rochet (13) est disposé sur le côté extérieur des ensembles de disques de moyeu (14) d'un côté du corps de moyeu (11),
**caractérisée en ce que**,
le disque de moyeu intérieur (141) est pourvu de trous de fixation intérieurs (141a) disposés par rapport aux parties évidées (140B) du disque de moyeu extérieur (140).

2. La structure de moyeu (10) selon la revendication 1, dans laquelle le disque de moyeu intérieur (141) est pourvu de parties évidées (141b) s'ouvrant vers l'extérieur, positionnées entre les trous de fixation intérieurs (141a).

3. La structure de moyeu (10) selon la revendication 1, dans laquelle le diamètre extérieur du disque de moyeu extérieur (140) est supérieur au diamètre extérieur du disque de moyeu intérieur (141).

4. Une roue de bicyclette **caractérisée en ce qu'**elle comprend:
une structure de moyeu (10) selon l'une quelconque des revendications 1 à 3 et une pluralité de rayons de roue (20), dans laquelle une extrémité d'une première pluralité de la pluralité de rayons de roue (20) est respectivement fixée au trou de fixation extérieur (140a) prévu dans les parties convexes de fixation (140A) du disque de moyeu extérieur (140) et une seconde pluralité de la pluralité de rayons (20) est fixée au trou de fixation intérieur (141a) prévu dans le disque de moyeu intérieur (141); et
une jante (30), dans laquelle les autres extrémités de la pluralité de rayons de roue (20) sont fixées à la jante (30).

5. La roue de bicyclette selon la revendication 4, dans laquelle, lesdites plusieurs parties convexes de fixation (140A) du disque de moyeu extérieur (140) sont pourvues d'une surface de coupe inclinée (140b) par rapport à la surface latérale du disque à rochet (13), et les surfaces de coupe inclinées (140b) sont prévues sur les parties convexes de fixation (140A) pour empêcher le contact entre la pluralité de rayons de roue (20) et les parties convexes de fixation (140A).

6. La roue de bicyclette selon la revendication 4, dans laquelle, le diamètre extérieur du disque de moyeu extérieur (140) est supérieur au diamètre extérieur du disque de moyeu intérieur (141).

7. La roue de bicyclette selon la revendication 4, dans laquelle, la partie évidée (141b) du disque de moyeu intérieur (141) est en outre pourvue d'une partie renfoncée (141c), et une profondeur de renfoncement de la partie renfoncée (141c) est inférieure au diamètre extérieur du trou de fixation extérieur (140a) prévu sur le disque de moyeu extérieur (140), et chacun des rayons (20) fixés aux parties convexes de fixation relatives (140A) du disque de moyeu extérieur (140) est agencé, lorsque le trou de fixation extérieur (140a) est utilisé, et la partie renfoncée (141c) de la partie évidée (141b) est configurée pour éviter plusieurs rayons (20) pendant l'assemblage, de sorte que les rayons (20) n'entrent pas en contact avec le disque de moyeu intérieur (141).
